Europäisches Patentamt

European Patent Office

Office européen des brevets

(19)

(11) Veröffentlichungsnummer: **0 353 472**
**A1**

## (12) EUROPÄISCHE PATENTANMELDUNG

(21) Anmeldenummer: **89112181.6**

(22) Anmeldetag: **04.07.89**

(51) Int. Cl.⁴: **B60R 21/13**

(30) Priorität: **29.07.88 US 226253**

(43) Veröffentlichungstag der Anmeldung:
**07.02.90 Patentblatt 90/06**

(84) Benannte Vertragsstaaten:
**BE DE FR GB SE**

(71) Anmelder: **DEERE & COMPANY**
**1 John Deere Road**
**Moline Illinois 61265(US)**

(72) Erfinder: **DeBraal, Stanley Jack**
**5589 Whispering Pines Drive**
**West Bend Wisconsin 53095(US)**
Erfinder: **Nickles, Daniel Robert**
**Box 484A Old Dutch Hollow Rd.**
**Monroe New York 10950(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Höhenverstellbarer Überschlagschutzrahmen für Fahrzeuge.**

(57) Der höhenverstellbare Überschlagschutzrahmen enthält neben den vertikalen Stützen (20) ein oberes separates Querteil (26). Die Höhe des Überschlagschutzrahmens ist durch eine Modifizierung der Verbindung zwischen den vertikalen Stützen (20) und dem Querteil (26) einstellbar. Die Verbindung zwischen den Stützen (20) und dem Querteil (26) erfolgt durch winkelförmige Eckteile (24). Zwischen jedem Eckteil (24) und der jeweiligen Stütze (20) kann ein Verlängerungsstück (22) eingefügt werden. Bei leicht geneigten Stützen (20) sind die beiden Schenkel (36, 38) des Eckteiles (24) unterschiedlich lang, so daß sich die Abstandsänderung bei verlängerter Stütze (20) durch Vertauschen der Schenkel (36, 38) ausgleichen läßt. Bei einer weiteren Ausgestaltung ist das Querteil (55) U-förmig ausgebildet. Die Verbindungsflächen (64) zwischen den Stützen (50) und dem Querteil (55) sind gegenüber der Erstreckung der Teile abgewinkelt. Das Querteil (55) läßt sich an den Stützen (50) auf zwei unterschiedliche Weisen befestigen. Zum einen kann es mit den Stützen (50) fluchtend ausgerichtet werden (hohe Ausführung), zum anderen kann es aber auch einen Winkel mit den Stützen (50) einschließen (niedrige Ausführung).

Bei einer weiteren Ausgestaltung sind die Verbindungen zwischen den Stützen (80) und den freien Schenkeln eines U-förmigen Querteiles (82) als Gelenkverbindung (84) ausgebildet.

FIG. 2

## Höhenverstellbarer Überschlagschutzrahmen für Fahrzeuge

Die Erfindung betrifft einen Überschlagschutzrahmen für Fahrzeuge mit zwei im wesentlichen vertikalen Stützen, deren obere Enden durch ein Querteil miteinander verbunden sind. Insbesondere soll der Überschlagschutzrahmen auf verschiedene Höhen einstellbar und im Zusammenhang mit Arbeitsfahrzeugen oder landwirtschaftlichen Schleppern verwendbar sein.

Mit Ausnahme sehr kleiner, relativ leichter Fahrzeuge, wie beispielsweise Rasen- und Gartentraktoren, sind die meisten Fahrzeuge mit einer Überschlagschutzvorrichtung versehen, die die Bedienungsperson im Falle eines ungewollten Umkippens des Fahrzeuges vor einem Zerdrücken schützen soll. Die einfachste Form einer Überschlagschutzvorrichtung, wie sie häufig bei kleinen landwirtschaftlichen Schleppern Verwendung findet, ist ein U-förmiger Rahmen. Die Enden des U sind mit dem Schlepperrahmen verbunden, und die Basis des U befindet sich im Bereich des Bedienungsstandes. Die Seiten des U können genau senkrecht ausgerichtet sein, sie verlaufen jedoch meistens von dem Bedienungsstand aus leicht nach hinten geneigt, um einen Freiraum im Bereich des Bedienungsstandes zu gewährleisten.

Unterschiedlich gestaltete Fahrzeuge erfordern zumeist unterschiedliche Überschlagschutzrahmen. Der Überschlagschutzrahmen muß jedoch hoch genug sein, um auch die größte Bedienungsperson bei einem Umkippen des Fahrzeuges zu schützen. Gleichzeitig sollte aber der Überschlagschutzrahmen auch so kurz wie möglich sein, um eine maximale Durchfahrtfreiheit zu gewährleisten.

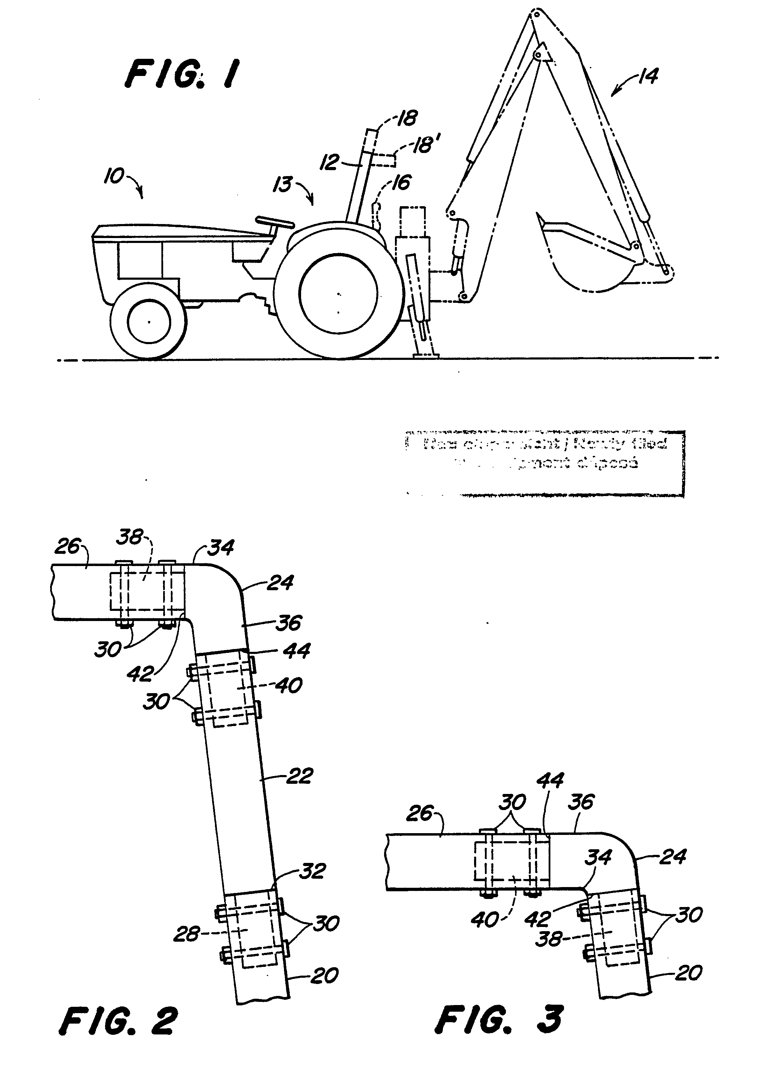

Das Anfügen bestimmter Anbaugeräte an das Fahrzeug kann sich auf die bevorzugte Höhe der Überschlagschutzvorrichtung auswirken. Beispielsweise ist ein Vielzwecktraktor gemäß Fig. 1 mit einem U-förmigen Überschlagschutzrahmen ausgerüstet. Dieser Überschlagschutzrahmen 12 weist eine Höhe auf, die einen ausreichenden Schutz für den Bedienungsstand 13 gewährleistet. Gleichzeitig ist er so kurz, daß sich für den Traktor 10 eine möglichst maximale Durchfahrtfreiheit ergibt. Ein derartiger Traktor 10 läßt sich jedoch auch mit einer rückwärtigen Ladereinrichtung ausrüsten, wie es die gestrichelten Linien bei 14 andeuten. Diese Ladereinrichtung enthält einen separaten Sitz 16, der in der Zeichnung nicht in seiner Gebrauchsstellung dargestellt ist. Wird der Sitz 16 in seine Gebrauchsstellung gebracht, so liegt er etwas über dem normalen Traktorsitz. Für diesen Fall bietet die Höhe der Überschlagschutzvorrichtung 12 keinen ausreichenden Freiraum für die Bedienungsperson. Die Überschlagschutzvorrichtung muß daher durch eine längere Überschlagschutzvorrichtung 18 ersetzt werden.

In der Vergangenheit wurden für das Ersetzen zwei unterschiedliche Überschlagvorrichtungen auf Lager gehalten, eine kürzere Ausführung für die Verwendung bei den meisten Traktoren und eine längere Ausführung für die Verwendung bei einer kleineren Anzahl von Traktoren, welche für die Ausrüstung mit einer Ladereinrichtung vorgesehen sind. Die Endverkäufer haben, wenn dies erforderlich war, die kürzeren Überschlagschutzrahmen gegen die höheren ausgewechselt.

Diese Vorgehensweise hat mehrere Nachteile. Zum einen muß der Händler einen Vorrat von Überschlagsschutzvorrichtungen mehrerer Größen auf Lager halten. Dies bindet sowohl Kapital als auch Lagerraum. Zum anderen sind die Befestigungspunkte für die Enden der Überschlagschutzbügel manchmal nicht gut zugänglich, so daß der Austausch zeitaufwendig sein kann.

Die mit der Erfindung zu lösende Aufgabe wird darin gesehen, einen Überschlagschutzrahmen für Fahrzeuge der eingangs genannten Art anzugeben, der in seiner Höhe leicht verstellbar ist. Dabei sollen bei guter Zugänglichkeit der Montagepunkte möglichst wenige Ersatzteile erforderlich sein.

Die Aufgabe wird erfindungsgemäß dadurch gelöst, daß zwischen jeder Stütze und dem entsprechenden Eckteil wahlweise ein Verlängerungsstück einfügbar ist, das heißt, der übliche Überschlagschutzrahmen wird aus mehreren trennbaren Teilen zusammengesetzt. Nach einer Abnahme der Querstrebe können die vertikalen Stützen problemlos durch Verlängerungsstücke in vertikaler Richtung verlängert werden, woraufhin die Querstrebe wieder montiert wird. Sind die vertikalen Stützen zueinander geneigt, so können vorzugsweise zwei L-förmige Eckteile mit unterschiedlicher Schenkellänge verwendet werden. Der Winkel zwischen den beiden Schenkeln wird dabei dem Neigungswinkel der vertikalen Stützen angepaßt. Der Längenunterschied der beiden Schenkel wird so bemessen, daß sich die Abstandsunterschiede zwischen den oberen Enden der vertikalen Stützen bzw. zwischen den oberen Enden der Verlängerungsstücke durch Vertauschen der beiden Schenkel ausgleichen lassen.

Eine weitere bevorzugte Lösung der Aufgabe besteht darin, daß die oberen Enden der vertikalen Stützen jeweils eine gegenüber der Horizontalen abgewinkelte Oberfläche aufweisen, die an eine entsprechend abgewinkelte Oberfläche am freien Ende des Querteiles derart anlegbar ist, daß durch Umdrehen des Querteiles dieses zwei Winkellagen zur vertikalen Stütze einnimmt, wobei das Querteil vorzugsweise entweder mit der vertikalen Stütze fluchtet oder mit dieser einen Winkel einschließt, und daß Mittel zur wahlweisen Befestigung der aufeinanderliegenden abgeschrägten Oberflächen der vertikalen Stütze und des Querteiles vorgesehen sind. Vorzugsweise ist das Querteil U-förmig ausgebildet und trägt die abgewinkelten Oberflächen an den Enden seiner beiden freien Schenkel. Die Neigung der abgewinkelten Oberflächen beträgt dabei beispielsweise 45°. Das Querteil kann bei einem Winkel von 45° so angeordnet werden, daß es mit den vertikalen Stützen fluchtet oder daß seine Enden vertauscht werden und es unter einem Winkel von 90° von den vertikalen Stützen absteht und sich horizontal, vorzugsweise nach hinten, erstreckt. Vorzugsweise sind auf der abgewinkelten Oberfläche zueinander korrespondierende Erhöhungen und Vertiefungen vorgesehen, die nach der Montage ineinander greifen und ein Verschieben der Oberflächen gegeneinander verhindern. Die Teile können durch Schrauben zusammen gehalten werden, die sich durch Bohrungen in den abgewinkelten Oberflächen erstrecken.

Eine weitere bevorzugte Lösung der Aufgabe ist darin zu sehen, daß das Querteil gelenkig mit den vertikalen Stützen verbunden ist und zwischen wenigstens zwei Lagen verschwenkbar ist, wobei in einer ersten Lage die Ausrichtung des Querteiles mit der der vertikalen Stützen in etwa übereinstimmt und in einer zweiten Lage beide einen Winkel miteinander einschließen, und daß Befestigungsmittel zur Feststellung des Querteiles in einer der Lagen vorgesehen sind. Auch bei dieser Lösung ist das Querteil vorzugsweise U-förmig ausgebildet. Es trägt an den Enden seiner beiden freien Schenkel jeweils die eine Hälfte eines Gelenkes, das mit der jeweils anderen an der vertikalen Stütze befestigten Gelenkhälfte über einen Gelenkbolzen in Verbindung steht. Das Querteil kann zwischen einer Lage, in der seine Ausrichtung mit der der vertikalen Stützen fluchtet, und einer im wesentlichen horizontalen Ausrichtung nach hinten verschwenkt werden. Geeignete Stifte, Schrauben und andere Mittel sind vorgesehen, um das Querteil in einer seiner ausgewählten Lagen festzuhalten.

Während bei der erstgenannten Ausgestaltung der Erfindung als Ersatzteile für eine Höhenverstellung die beiden Verlängerungsstücke sowie entsprechende Befestigungsmittel bereit gehalten werden müssen, sind bei den beiden zuletzt genannten Ausgestaltungen der Erfindung keine zusätzlichen Ersatzteile erforderlich. Bei der ersten Ausgestaltung ist es von Vorteil, daß die Teile, die für die Verlängerung des Überschlagschutzrahmens erforderlich sind, lediglich dann mitgeliefert werden müssen, wenn verlängerbare Überschlagschutzrahmen vom Besteller verlangt werden. Zwar müssen die Händler die Verlängerungen ebenso wie die bisher üblichen höheren Überschlagschutzrahmen auf Lager halten, jedoch beanspruchen erstere wesentlich weniger Lagerraum und binden weniger Kapital.

Weitere vorteilhafte Ausgestaltungen und Weiterbildungen der Erfindung gehen aus den Unteransprüchen hervor.

Anhand der Zeichnung, die Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1 die schematische Darstellung eines Schleppers mit Überschlagschutzvorrichtung und einem Hecklader,

Fig. 2 und 3 eine hohe und eine normal hohe Überschlagschutzvorrichtung gemäß einer ersten Ausgestaltung der vorliegenden Erfindung,

Fig. 4 und 5 eine zweite Ausgestaltung der Erfindung in einer hohen und einer normal hohen Ausbildung,

Fig. 6 eine Aufsicht auf eine Planfläche der in Eingriff stehenden Oberflächen einer Überschlagschutzvorrichtung gemäß der Linie 6-6 in Fig. 5,

Fig. 7 und 8 Seitenansichten einer dritten Ausgestaltung der Erfindung in einer hohen und einer normalen Ausbildung und

Fig. 9 die Schnittansicht entlang der Linie 9-9 in Fig. 7.

Fig. 2 stellt die Ecke einer ersten Ausgestaltung eines erfindungsgemäßen Überschlagschutzrahmens in einer hohen Ausbildung dar. Sie enthält ein im wesentlichen senkrechtes Bauteil 20, eine Verlängerung 22, ein Eckstück 24 und ein Querteil 26. Das vertikale Teil 20 ist nicht genau vertikal ausgerichtet. Es steht etwas schräg nach innen und kann auch relativ zum Schlepper 10 etwas schräg nach hinten abgewinkelt sein, wie es bei dem Überschlagschutzrahmen 12 in Fig. 1 dargestellt ist. Das vertikale Teil 20 ist vorzugsweise völlig hohl ausgebildet, hat jedoch am oberen Ende eine Öffnung zur Aufnahme einer Nase 28, die sich an der Verlängerung 22 befindet. Diese Nase 28 wird an dem vertikalen Teil 20 beispielsweise durch Schraubverbindungen 30 befestigt. Die Verlängerung 22 weist eine Schulter 32 an der Grundfläche der Nase 28 auf, welche bündig an dem oberen Ende des vertikalen Teiles 20 anliegt, so daß die mit dem vertikalen Teil 20 verschraubte Verlängerung 22 in einer festen Lage gehalten wird und im wesentlichen eine Fortsetzung des vertikalen Teiles 20 bildet.

Das Eckstück 24 ist im wesentlichen L-förmig ausgebildet. Jeder Schenkel 34, 36 des Eckstückes 24 ist mit einer Nase 38, 40 versehen, deren Form im wesentlichen mit der Form der Nase 28 der Verlängerung 22 übereinstimmt. Jeder Schen kel 34, 36 des Eckstückes 24 ist ferner mit einer Schulter 42, 44 an der Grundfläche seiner Nase 38, 40 versehen.

Das obere Ende der Verlängerung 22 und jedes Ende des Querteiles 26 enthalten Öffnungen, die denen in dem vertikalen Teil 20 entsprechen und der Aufnahme der Nasen 38, 40 des Eckstückes 24 dienen. Auch hier werden die Nasen 38, 40 in den Öffnungen beispielsweise mittels Schraubverbindungen 30 gehalten. Wie zwischen vertikalem Teil 20 und Verlängerungen 22 liegen auch hier die Schultern 42, 44 bündig an den Enden der Verlängerung 22 und dem Querteil 26 an, so daß die ganze Anordnung starr zusammengehalten wird, wenn die Schraubverbindungen 30 angezogen sind.

Es sei erwähnt, daß die Schenkel 34, 36 nicht im rechten Winkel zueinander stehen. Der Winkel ist so gewählt, daß er mit dem Winkel des vertikalen Teiles 20 zusammenpaßt, so daß das Querteil 26 eine im wesentlichen horizontale Lage einnimmt.

Fig. 3 zeigt die erste Ausgestaltung der Erfindung in einer Ausbildung mit Standardhöhe. In dieser Ausbildung wurde die Verlängerung 22 weggelassen. Die beiden Enden des Eckstückes 24 sind gegenüber der verlängerten Ausbildung gemäß Fig. 2 umgedreht, so daß die Nase 40 des Schenkels 36 mit dem Querteil 26 verbunden ist, während die Nase 38 des Schenkels 34 mit dem vertikalen Teil 20 verbunden ist. Wie aus der Zeichnung leicht ersichtlich, ist der Schenkel 36 etwas länger als der Schenkel 34. Die zusätzliche Länge kompensiert die Unterschiede zwischen der Lage des oberen Endes des vertikalen Teiles 20 und der Lage des oberen Endes der Verlängerung 22, wenn diese am vertikalen Teil 20 befestigt ist, so daß das selbe Eckstück 24 in jeder der beiden Ausbildungen verwendet werden kann. In der hohen Ausbildung vergrößert die zusätzliche Länge des Schenkels 36 lediglich die Höhe des Überschlagschutzrahmens. In der Ausbildung mit Standardhöhe verlängert die zusätzliche Länge des Schenkel 36 die horizontale Länge des Querteiles 26.

Es ist ersichtlich, daß in dieser Konstruktion ein Überschlagschutzrahmen mit Standardhöhe in einen solchen mit höherem Bügel erfolgen kann, wobei lediglich als zusätzliche Teile eine Verlängerung 22 für jedes vertikale Bauteil 20 und die zugehörigen Schrauben 30 für deren Befestigung erforderlich sind. Daher kann der Überschlagschutzrahmen entweder von der Fabrik mit montierten Verlängerungen 22, die anschließend bei Bedarf entfernt werden können, ausgeliefert werden, oder - vorzugsweise - der Händler kann einfach Verlängerungen 22 und Schrauben 30 auf Lager halten und diese bei Bedarf anbauen. Dabei sind alle für die Höhenänderung erforderlichen Teil im oberen Bereich des Überschlagschutzrahmens leicht zugänglich und montierbar.

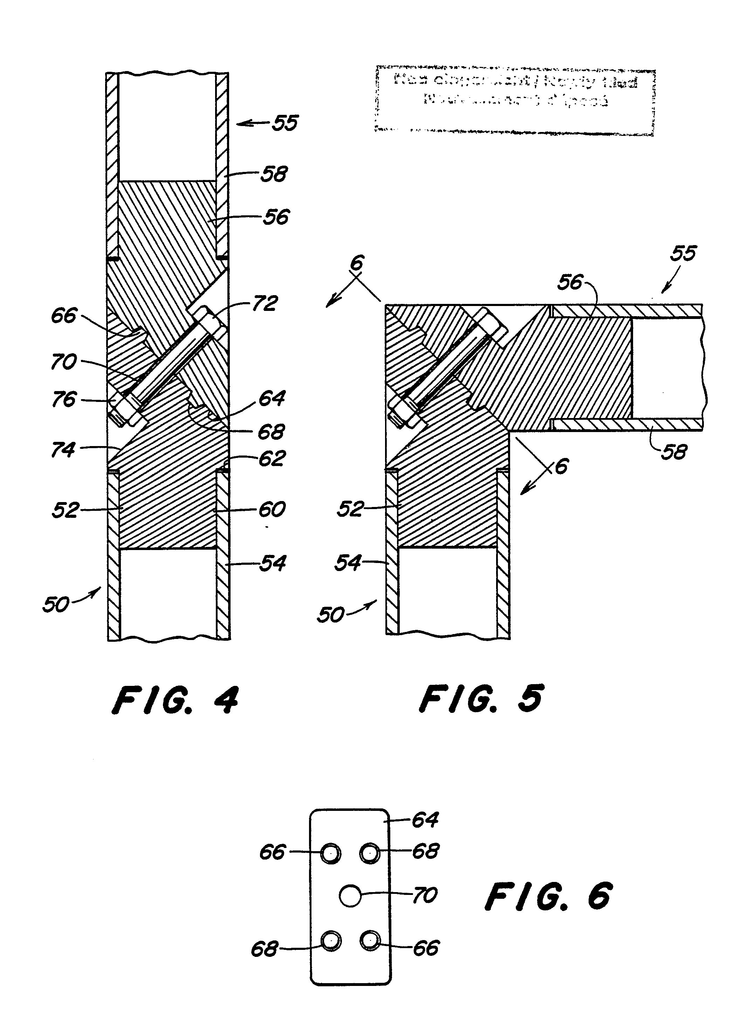

Aus den Figuren 4 bis 6 geht eine zweite erfindungsgemäße Ausgestaltung hervor. Bei dieser Ausgestaltung endet das vertikale Bauteil 50 in einer Oberfläche 64, welche gegenüber der Ausrichtung des vertikalen Bauteiles 50 abgewinkelt ist. Der oberste Punkt des vertikalen Bauteiles 50 stellt die erforderliche Höhe für einen Überschlagschutzrahmen mit normaler Höhe dar. Der Winkel ist in der Zeichnung mit 45° dargestellt, er kann jedoch prinzipiell jeden Wert einnehmen. Auch wenn das obere Ende des vertikalen Bauteiles 50 auf beliebige Weise in diese Form gebracht werden kann, wird es vorzugsweise durch ein Gußstück 52 gebildet, welches auf dem oberen Ende eines Rohres 54 beispielsweise durch Verschweißen befestigt ist und weiter unten noch näher beschrieben werden wird.

Das Querteil 55 des Überschlagschutzrahmens ist U-förmig ausgebildet und endet mit einem Winkel (in dem vorliegenden Beispiel 45°), der sich mit dem Winkel des vertikalen Bauteiles 50 ergänzt. Auch hier kann die Winkeloberfläche durch beliebige geeignete Mittel gebildet werden. Vorzugsweise wird sie durch ein Gußstück 56, welches an einem U-förmigen, das Hauptteil des Querstückes 55 bildenden Rohres 58 befestigt ist, gebildet.

Vorzugsweise werden im wesentlichen identische Gußteile auf jeder Seite des Überschlagschutzrahmens verwendet. Bezugnehmend auf das Gußstück 52, weist dieses eine Nase 60 auf, die sich in das Rohr 54 erstreckt, in welchem sie befestigt ist. Eine Schulter 62 befindet sich an der Grundlinie der Nase 60, welche vorzugsweise bündig an dem Ende des Rohres 54 anliegt und mit diesem verschweißt ist. Die hierzu gegenüberliegende Fläche 64 des Gußstückes 52 verläuft im wesentlichen unter einem Winkel von 45°. Diese Oberfläche 64 ist mit Anschlußerhöhungen 66 und Vertiefungen 68 versehen, die dem Ineinandergreifen mit entsprechenden Erhöhungen 66 und Vertiefungen 68 eines angrenzenden Gußteiles 56 dienen, wie es weiter unten näher beschrieben werden wird. Das Gußteil 52 enthält ferner eine Durchgangsbohrung 70 zur Aufnahme einer Schraube 72, durch welche das Gußteil 52 mit dem angrenzenden Gußteil 56 verbunden wird. Vorzugsweise befindet sich in der Seitenfläche des Gußteiles 52 eine Aussparung 74, so daß der Kopf der Schraube 72 oder die Mutter 76, die auf die Schraube 72 aufgedreht ist, vollständig innerhalb der äußeren Konturen des Überschlagschutzrahmens liegen.

Um den Überschlagschutzrahmen in die hohe Konfiguration zu bringen, werden die beiden Gußstücke 52, 56 so zueinander angeordnet, daß sich ihre zugeordneten Winkel derart ergänzen, daß sich eine gestreckte Verbindung ergibt, wie es Fig. 4 darstellt. Die Schraube 72 und die Mutter 74 dienen dazu, die Oberflächen 64 der beiden Gußteile 52, 56 glatt aufeinander zu drücken. In dieser Lage greifen die Erhöhungen 66 des Gußteiles 52 in die Vertiefungen 68 des Gußtei les 56 ein und umgekehrt, wodurch verhindert wird, daß sich die beiden Gußstücke 52, 56 gegeneinander entlang ihrer gemeinsamen Oberfläche 64 verschieben.

Um den Überschlagschutzrahmen in die Standardhöhe zu bringen, werden die Schrauben 72 und Muttern 76 aus den Durchgangsbohrungen 70 der Gußstücke 52, 56 entfernt, das Querteil 55 des Überschlagschutzrahmens wird so verdreht, daß seine beiden festen Enden vertauscht sind, und dann wieder an das Gußstück 52 angelegt. Die Schrauben 72 und Muttern 76 werden dann wieder in den Durchgangsbohrungen 70 angeordnet und angezogen, um die Gußstücke 52, 56 miteinander zu verbinden. In dieser Lage sind die beiden Winkel so zusammengefügt, daß sie zusammen 90° ergeben. Dabei erstreckt sich das Querteil 55 im wesentlichen relativ zum vertikalen Teil 50 nach hinten, wie es unter dem Bezugszeichen 18′ in Fig. 1 dargestellt ist. Auch hier verhindern die ineinandergreifenden Erhöhungen 66 und Vertiefungen 68 eine Verschiebung der Gußteile 52, 56 zueinander entlang der gemeinsamen Oberfläche 64.

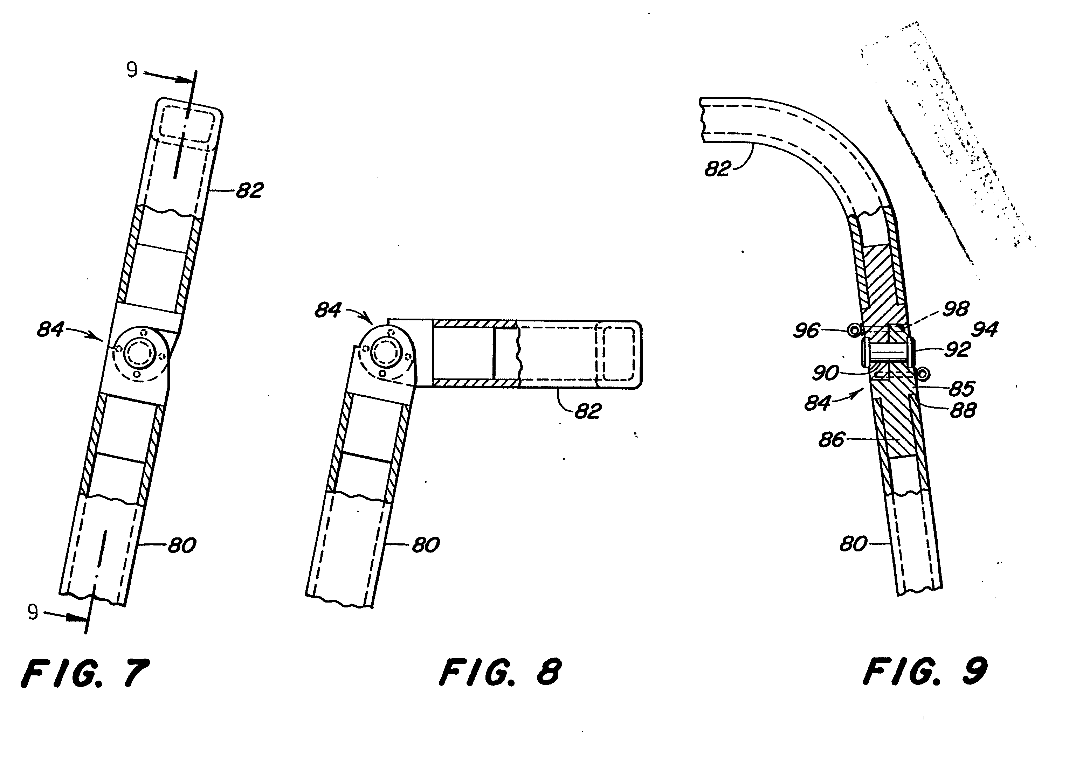

Die Figuren 7 bis 9 stellen eine dritte erfindungsgemäße Ausgestaltung eines Überschlagschutzrahmens dar. Auch hier bestehen die im wesentlichen vertikalen Bauteile 80 und das im wesentlichen U-förmige Querteil 82 aus gesonderten Teilen. Diesmal besteht die Verbindung zwischen den Teilen jedoch aus einem Gelenk 84.

Das Gelenk 84 besteht zweckmäßigerweise aus zwei identischen Gußteilen 85. Wie es am besten aus Fig. 9 ersichtlich ist, weist jedes Gußteil 85 eine Nase 86 zur Einfügung in das vertikale Teil 80 oder in das U-förmige Querteil 82 und eine Schulter 88 auf, die eng gegen das Ende des Rohres 80, in das die Nase 86 eingreift, anliegt. Auch hier ist das Gußteil 85 mit dem jeweiligen Rohr 80 verschweißt oder auf andere Weise befestigt. Jedes Gußstück 85 ist mit einer Durchgangsbohrung 90 versehen. Es besitzt ferner eine Drehfläche 94, die im wesentlichen vertikal verläuft, im Gegensatz zu den anderen Außenflächen des Gußteiles 85, die im wesentlichen parallel zu der äußeren Oberfläche des vertikalen Teiles 80 und des U-förmigen Querteiles 82 verlaufen. Es sind schnell lösbare Stifte 96 vorgesehen, die in Aussparungen 98 in der Drehfläche 94 des gegenüberliegenden Gußteiles 85 einsteckbar sind, um das Querteil 82 in einer gewünschten Lage festzuhalten.

Die beiden gewünschten Ausrichtungen gehen aus den Figuren 7 und 8 hervor. Gemäß Fig. 7 ist das Gelenk 34 so ausgerichtet, daß das Querteil 82 und das vertikale Teil 80 fluchten, während gemäß Fig. 8 das Gelenk 84 so eingestellt ist, daß das Querteil 82 nach hinten von dem vertikalen Teil 80 absteht (siehe Fig. 1, Teil 18′).

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen. Beispielsweise kann statt der beschriebenen Verschweißung oder Verschraubung einzelner Teile jede andere geeignete Befestigungsmöglichkeit angewendet werden. Auch wenn gemäß der zweiten und dritten Ausgestaltung die genaue Ausrichtung der Teile durch Erhöhungen oder Stifte, die in entsprechende Vertiefungen oder Aussparungen eingreifen, vorgenommen wird, können auch andere geeignete Ausrichtmittel verwendet werden. Die zweite und dritte Ausgestaltung wurden ferner mit Querteilen dargestellt, die bei Einnahme der Standardhöhe im wesentlichen senkrecht zu den vertikalen Teilen verlaufen. Es vesteht sich jedoch, daß jeder andere Winkel durch entsprechende Wahl der Endwinkel oder der Gelenkanschläge einstellbar ist. Wird jedoch das vertikale Teil nach hinten abgekippt, wie es in Fig. 1 angedeutet wurde, so ist es vorteilhaft, einen Winkel zu wählen, bei dem das Querteil horizontal verläuft.

## Ansprüche

1. Überschlagschutzrahmen für Fahrzeuge mit zwei im wesentlichen vertikalen Stützen (20), die über obere Eckteile (24) mit einem Querteil (26) in Verbindung stehen, wobei sich das Querteil (26) auf wenigstens zwei unterschiedliche Höhen einstellen läßt, dadurch gekennzeichnet, daß zwischen jeder Stütze (20) und dem entsprechenden Eckteil (26) wahlweise ein Verlängerungsstück (22) einfügbar ist.

2. Überschlagschutzrahmen nach Anspruch 1, dadurch gekennzeichnet, daß das Eckteil (24) zwei Schenkel (34, 36) enthält, wobei der eine Schenkel (34) mit dem Querteil (26) verbindbar ist und der andere Schenkel (36) entweder mit der vertikalen Stütze (20) oder bei Verwendung eines Verlängerungsstückes (22) mit diesem verbindbar ist.

3. Überschlagschutzrahmen nach Anspruch 2, dadurch gekennzeichnet, daß die vertikalen Stützen (20) einen leichten Winkel mit der Senkrechten einschließen und zueinander geneigt sind und daß die Schenkel (34, 36) der Eckteile (24) einen ergänzenden Winkel zueinander einnehmen.

4. Überschlagschutzrahmen nach Anspruch 3, dadurch gekennzeichnet, daß einer der Schenkel (36) des Eckteiles (24) um einen Betrag länger ist als der andere, der sich aus dem Unterschied des horizontalen Abstandes zwischen den Oberkanten der vertikalen Stützen (20) und dem Abstand zwischen den Oberkanten der montierten Verlängerungsstücke (22) ergibt.

5. Überschlagschutzrahmen nach einem der Ansprüche 2 bis 4, dadurch gekennzeichnet, daß beide Schenkel (34, 36) jedes Eckteiles (24) und ein Ende jedes Verlängerungsstückes (22) Vorsprünge (28, 38, 40) aufweisen, die im wesentlichen miteinander identisch sind und in entsprechende gleichartige Ausnehmungen im oberen Bereich jeder vertikalen Stütze (20) und den Enden des Querteiles (26) passen.

6. Überschlagschutzrahmen nach Anspruch 6, dadurch gekennzeichnet, daß jedes mit einem Vorsprung (28, 38, 40) versehene Ende an der Basis des Vorsprunges (28, 38, 40) eine Schulter (32, 42, 44) aufweist, die bei zusammengebautem Rahmen bündig an dem Ende des benachbarten Teiles anliegt.

7. Überschlagschutzrahmen nach Anspruch 5 oder 6, dadurch gekennzeichnet, daß jeder Vorsprung (28, 38, 40) und jede den Vorsprung (28, 38, 40) aufnehmende Wandung mit zueinander passenden Bohrungen versehen sind, in welche Schrauben (30) einsetzbar sind, die die Vorsprünge (28, 38, 40) in den zugehörigen Ausnehmungen halten, wobei die Schultern (32, 42, 44) an den entsprechenden Teilenden anliegen.

8. Überschlagschutzrahmen für Fahrzeuge mit zwei im wesentlichen vertikalen Stützen (50) deren obere Enden durch ein Querteil (55) miteinander verbunden sind, dadurch gekennzeichnet, daß die oberen Enden der vertikalen Stützen (50) jeweils eine gegenüber der Horizontalen abgewinkelte Oberfläche (64) aufweisen, die an eine entsprechend abgewinkelte Oberfläche am freien Ende des Querteiles (55) derart anlegbar ist, daß durch Umdrehen des Querteiles (55) dieses zwei Winkellagen zur vertikalen Stütze (50) einnehmen kann, wobei es vorzugsweise entweder mit der vertikalen Stütze (50) fluchtet oder mit diesem einen Winkel einschließt, und daß Mittel zur wahlweisen Befestigung der aufeinanderliegenden abgeschrägten Oberflächen der vertikalen Stütze (50) und des Querteiles (55) vorgesehen sind.

9. Überschlagschutzrahmen nach Anspruch 8, dadurch gekennzeichnet, daß das Querteil (55) U-förmig ausgebildet ist und die beiden freien Schenkel die abgewinkelten Oberflächen tragen.

10. Überschlagschutzrahmen nach Anspruch 8 oder 9, dadurch gekennzeichnet, daß die Oberflächenwinkel 45° betragen.

11. Überschlagschutzrahmen nach einem der Ansprüche 8 bis 10, dadurch gekennzeichnet, daß die Oberflächen miteinander korrespondierende, ineinandergreifende Erhöhungen (66) und Vertiefungen (68) aufweisen, die eine Verschiebung der Oberflächen gegeneinander verhindern.

12. Überschlagschutzrahmen nach einem der Ansprüche 8 bis 11, dadurch gekennzeichnet, daß die Enden der vertikalen Stützen (50) und des Querteiles (55) zur Aufnahme von Befestigungsschrauben (72) zueinander passende Bohrungen (70) aufweisen.

13. Überschlagschutzrahmen nach Anspruch 12, dadurch gekennzeichnet, daß die genannten Enden Aussparungen (74) im Bereich der Bohrungen aufweisen, die dazu dienen, daß die aus der jeweiligen Bohrung (70) herausragenden Schraubenteile nicht über die Peripherie des Überschlagschutzrahmens hinausragen.

14. Überschlagschutzrahmen nach einem der Ansprüche 8 bis 13, dadurch gekennzeichnet, daß die Hauptabschnitte der vertikalen Stützen (50) und des Querteiles (55) rohrförmig ausgebildet sind.

15. Überschlagschutzrahmen nach Anspruch 14, dadurch gekennzeichnet, daß an den Enden der rohrförmigen Teile Gußstücke (52, 56) mit entsprechender Endausbildung befestigt sind.

16. Überschlagschutzrahmen nach Anspruch 15, dadurch gekennzeichnet, daß jedes Gußteil (52, 56) auf der der abgewinkelten Oberfläche abgewandten Seite einen Vorsprung (60) aufweist, der in das Innere des entsprechenden rohrförmigen Teiles eingreift, und daß für ein bündiges Anliegen des Gußteiles (52, 56) am rohrförmigen Teil das Gußteil (52, 56) an der Basis des Vorsprunges (60) eine Schulter (62) trägt.

17. Überschlagschutzrahmen für ein Fahrzeug mit zwei im wesentlichen vertikalen Stützen (80), deren obere Enden durch ein Querteil (82) miteinander verbunden sind, dadurch gekennzeichnet, daß das Querteil (82) gelenkig mit den vertikalen Stützen (80) verbunden ist und zwischen wenigstens zwei Lagen verschwenkbar ist, wobei in einer ersten Lage die Ausrichtung des Querteiles (82) mit der der vertikalen Stützen (80) in etwa übereinstimmt und in einer zweiten Lage beide einen Winkel miteinander einschließen, und daß Befestigungsmittel (96) zur Festellung des Querteiles (82) in einer der Lagen vorgesehen sind.

18. Überschlagschutzrahmen nach Anspruch 17, dadurch gekennzeichnet, daß das Querteil (82) U-förmig ausgebildet ist und die beiden freien Schenkel Gelenkteile (84) enthalten.

19. Überschlagschutzrahmen nach Anspruch 17 oder 18, dadurch gekennzeichnet, daß die Hauptabschnitte der ver tikalen Stützen (80) und des Querteiles (82) rohrförmig ausgebildet sind.

20. Überschlagschutzrahmen nach Anspruch 19, dadurch gekennzeichnet, daß an den Enden der rohrförmigen Teile Gußstücke (85) mit entsprechender gelenkiger Endausbildung befestigt sind.

21. Überschlagschutzrahmen nach Anspruch 20, dadurch gekennzeichnet, daß jedes Gußteil (85) auf der dem Gelenk abgewandten Seite einen Vorsprung (86) aufweist, der in das Innere des entsprechenden rohrförmigen Teiles eingreift, daß für ein bündiges Anliegen des Gußteiles (85) am rohrförmigen Teil das Gußteil (85) an der Basis des Vorsprunges (86) eine Schulter (88) trägt, und daß jedes Gußteil (85) einen Drehausleger mit einer ebenen Fläche und einer Bohrung (90) zur Aufnahme eines Drehbolzens (92) enthält, derart, daß zwei Gußteile (85) mit ihren ebenen Flächen aufeinander liegen und ein Gelenk bilden.

22. Überschlagschutzrahmen nach Anspruch 21, dadurch gekennzeichnet, daß die vertikalen Stützen (80) leicht zueinander geneigt sind und die ebenen Flächen der an den beiden vertikalen Stützen (80) befestigten Gußteile (85) parallel zueinander ausgerichtet sind.

23. Überschlagschutzrahmen nach einem der Ansprüche 20 bis 22, dadurch gekennzeichnet, daß jedes Gußteil (85) wenigstens eine Bohrung zur Aufnahme eines Befestigungsstiftes (96) und wenigstens zwei Aussparungen (98), in die der Stift (96) des angrenzenden Gußteiles (85) einführbar ist, aufweist.

24. Traktor mit einem Überschlagschutzrahmen nach einem der Ansprüche 1 bis 23.

# FIG. 1

14

18
18'
12
16
10
13

26  38  34
24
36
30
42  44
30  40
22
32
28  30
20

# FIG. 2

26  30  44  36
34  24
40  42  30
38
20

# FIG. 3

13442

FIG. 4

FIG. 5

FIG. 6

FIG. 7

FIG. 8

FIG. 9

EP 0 353 472 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 175 259 (J.I. CASE EUROPE LTD) <br> * Insgesamt * <br> --- | 17-19, 24 | B 60 R 21/13 |
| X | FR-A-2 299 992 (GEORG FRITZMEIER KG) <br> * Figuren 1,3; Ansprüche 1,7-9 * <br> --- | 17-19, 24 | |
| X <br> A | GB-A-1 522 285 (SUSAN BECK WHITE) <br> * Figuren; Seite 2, Zeilen 31-56 * <br> --- | 17-19, 24 <br> 8,14 | |
| Y | US-A-4 148 504 (RUSHING) <br> * Figuren 1-3; Zusammenfassung * <br> --- | 1,2 | |
| Y | US-A-1 360 770 (McEWEN) <br> * Figuren 5,9; Seite 1, Zeilen 9-34 * <br> --- | 1,2 | |
| A | US-A-3 402 941 (MARTINMAAS) <br> * Figuren 1-4; Spalte 1, Zeilen 38-61; <br> Spalte 2, Zeilen 18-63 * <br> ----- | 1,24 | |

| RECHERCHIERTE SACHGEBIETE (Int. Cl.5) |
|---|
| B 60 R <br> B 62 D <br> B 66 F |

Der vorliegende Recherchenbericht wurde für alle Patentansprüche erstellt

| Recherchenort | Abschlußdatum der Recherche | Prüfer |
|---|---|---|
| DEN HAAG | 30-10-1989 | DUBOIS B.F.J. |

EPO FORM 1503 03.82 (P0403)